# EUROPEAN PATENT APPLICATION

(11) **EP 4 773 460 A1**
(43) Date of publication of application: **08.07.2026**
(21) Application number: 24859015.0
(22) Date of filing: 03.04.2024
(51) Int. Cl.: H02J 7/00, H02H 7/18, H02J 7/02

(54) **POWER STORAGE SYSTEM, POWER STORAGE UNIT, POWER SUPPLY SYSTEM, AND POWER STORAGE SYSTEM CONTROL METHOD**

(30) Priority: 01.09.2023 WO PCT/JP2023/032106
(71) Applicant: MITSUBISHI ELECTRIC CORPORATION, Chiyoda-ku Tokyo 100-8310 (JP)
(72) Inventor: HORINOUCHI, Katsuhiko, Tokyo 100-8310 (JP); KAI, Takayuki, Tokyo 100-8310 (JP)
(74) Representative: Meissner Bolte Partnerschaft mbB
(86) International application number: PCT/JP2024/013721
(87) International publication number: WO 2025/046966

(57) **Abstract**

A power storage system is composed of units (13) each including a storage battery group (30) connected between a high voltage side terminal (28A) and a low voltage side terminal (28B), a first current limiting device (36), a first load switch (41), and a bypass circuit (48). The first current limiting device (36) functions to limit a current flowing between the high voltage side terminal (28A) and the storage battery group (30). The first load switch (41) is connected in series with the storage battery group (30) and the first current limiting device (36). The bypass circuit (48) bypasses between the high voltage side terminal (28A) and the low voltage side terminal (28B). The bypass switch (49) switches the bypass circuit (48) between conductive and non-conductive.

## Description

### TECHNICAL FIELD

The present disclosure relates to a power storage system, a power storage unit, a power supply system, and a method for controlling the power storage system.

### BACKGROUND ART

As renewable energy increases for decarbonization, a large-capacity power storage system is used to stabilize a power system. Furthermore, a power storage system having a relatively large capacity is also used for electric vehicles, battery electric railcars, and other similar mobile objects that operate with electric power of a storage battery. For these power storage systems, a large capacity is implemented by connecting small-scale storage battery groups in series and/or in parallel.

For example, PTL 1 (Japanese Patent Laying-Open No. 2009-212020) discloses a power storage device having a configuration with a plurality of charging/discharging units connected in parallel. Each charging/discharging unit includes a battery string having unit secondary batteries connected in series, a resistive element connected in series with the battery string, and a resistor short-circuit switch connected in parallel with the resistive element. Each charging/discharging unit further includes an on/off switch connected in series with the battery string.

PTL 2 (WO2014/156041) discloses a power supply system comprising: a plurality of battery units each including a plurality of battery cells connected in series; and a connection unit that connects the plurality of battery units in parallel and connects the plurality of battery units to an external power source. The connection unit includes a parallel line connecting the plurality of battery units in parallel, and a plurality of connections each connecting a corresponding battery unit to the parallel line. Each connection includes a series circuit composed of a first switch and a second switch connected in series between the parallel line and a corresponding battery unit, a subordinate connection circuit connected in parallel with the second switch and composed of a series circuit of a current limiting resistor and a third switch, a first rectification element connected in parallel with the first switch and having a rectifying function in a direction in which a current passes from the parallel line to the battery unit, and a second rectification element connected in parallel with the second switch and having a rectifying function in a direction in which a current passes from the battery unit to the parallel line.

PTL 3 (Japanese Patent Laying-Open No. 2022-141451) discloses a power storage system comprising a plurality of power storage cells connected in series and a plurality of bypass circuits each provided for a power storage cell. Each bypass circuit includes a bypass line, and a first switch and a second switch. The bypass line bypasses a corresponding power storage cell. The first switch is provided on the bypass line. The second switch is provided between the positive electrode of a corresponding power storage cell and one end of the bypass line. When the power storage cells are to be all charged/discharged, each first switch is turned off and each second switch is turned on.

PTL 4 (Japanese Patent Laying-Open No. 2020-043653) discloses a power storage device comprising a plurality of power storage units connected in series. Each power storage unit includes a charging/discharging terminal pair, a power storage portion and a charging switch that are connected in series between the charging/discharging terminal pair, and a bypass switch that bypasses between the charging/discharging terminal pair. In a charging mode in which the power storage portion is charged, the charging switch is controlled to be turned on, and the bypass switch is controlled to be turned off. In a bypass mode in which charging the power storage portion is stopped, the charging switch is controlled to be turned off, and the bypass switch is controlled to be turned on.

### CITATION LIST

### PATENT LITERATURE

PTL 1: Japanese Patent Laying-Open No. 2009-212020
PTL 2: WO 2014/156041
PTL 3: Japanese Patent Laying-Open No. 2022-141451
PTL 4: Japanese Patent Laying-Open No. 2020-043653

### SUMMARY OF INVENTION

### TECHNICAL PROBLEM

When a power storage system used for stabilizing a power system stops, the power system may become unstable. A power storage system used together with an unstable power source such as wind power generation needs constant charging/discharging to stabilize an output of an entire power supply system. When a storage battery system used for a mobile object such as an electric vehicle, a battery electric railcar, and an electrically motored aircraft stops due to a failure of a part of the storage battery system, safe operation of the mobile object is prevented.

Therefore, even when a part of the storage battery system therefor fails, it is necessary to continue to operate the entire system while disconnecting or bypassing that failed part. When the power storage systems disclosed in PTLs 1 to 4 have a part of the storage battery failed, the power storage systems cannot disconnect or bypass that failed part while the entire power storage system continues operation.

Specifically, the power storage device disclosed in PTL 1 allows a battery string to be entirely disconnected from the power storage device by turning off the on/off switch connected in series with the battery string. However, it cannot disconnect or bypass a failed unit secondary battery alone. Similarly, the power supply system disclosed in PTL 2 also allows a string of battery cells that configures a battery unit to be entirely disconnected from the power supply system by turning off all of the first, second and third switches constituting the connection. However, it cannot disconnect or bypass a failed battery cell alone.

Furthermore, although the power storage system of PTL 3 is provided with a bypass circuit for each power storage cell, the power storage system cannot bypass a short-circuited and thus failed power storage cell while the power storage system electrically conducts. This is because turning on the first switch provided on the bypass line while the second switch connected in series with a power storage cell is held on passes a short-circuit current between the positive and negative electrodes of the power storage cell through the bypass line. The power storage device disclosed in PTL 4 has a similar problem.

The present disclosure has been made in view of the above-described issue, and an object of the present disclosure is to provide a power storage system allowing a failed part of the power storage system to be switched to a bypass path without instantaneous interruption to allow continuous operation.

### SOLUTION TO PROBLEM

In an embodiment, a power storage system comprises a plurality of units connected in series. The plurality of units each include a high voltage side terminal, a low voltage side terminal, a storage battery group connected between the high voltage side terminal and the low voltage side terminal, a first current limiting device, a first load switch, a bypass circuit, and a bypass switch. The first current limiting device is connected between the high voltage side terminal and the storage battery group, and in operation functions to limit a current flowing between the high voltage side terminal and the storage battery group. The first load switch is connected in series with the first current limiting device between the high voltage side terminal and the storage battery group. The bypass circuit is connected in parallel with the storage battery group, the first current limiting device, and the first load switch between the high voltage side terminal and the low voltage side terminal. The bypass switch switches the bypass circuit between conductive and non-conductive.

### ADVANTAGEOUS EFFECTS OF INVENTION

According to the above embodiment, each unit constituting the power storage system includes the first current limiting device, the first load switch, the bypass circuit, and the bypass switch. Thus, when a part of the power storage system fails, a current path at the failed part can be switched to a bypass path without instantaneous interruption to continue to operate the power storage system.

### BRIEF DESCRIPTION OF DRAWINGS

Fig. 1 is a general circuit diagram of a power supply system comprising a power storage system according to a first embodiment.
Fig. 2 is an internal circuit diagram of a unit provided in a positive side string.
Fig. 3 is an internal circuit diagram of a unit provided in a negative side string.
Fig. 4 is a flowchart of an operation of a switching controller when a failed unit is disconnected without instantaneous interruption of a conduction current.
Fig. 5 is a flowchart of an operation of the switching controller when a conduction current is temporarily interrupted and a failed unit is disconnected.
Fig. 6 is a flowchart of an operation of the switching controller when a unit is returned without instantaneous interruption of a conduction current.
Fig. 7 is a flowchart of an operation of the switching controller 44 when a conduction current is temporarily interrupted and a unit is returned.
Fig. 8 is a flowchart of a variation of Fig. 7.
Fig. 9 is a circuit diagram of an example of a unit converter of Fig. 1.
Fig. 10 is a circuit diagram of an exemplary configuration of a power storage system according to a second embodiment.
Fig. 11 is an enlarged diagram of a portion of the power storage system of Fig. 10, which corresponds to a single positive side string.
Fig. 12 is an enlarged diagram of a portion of the power storage system of Fig. 10, which corresponds to a single negative side string.
Fig. 13 is a general circuit diagram of a power supply system comprising a power storage system according to a third embodiment.
Fig. 14 is a flowchart of a protective operation of a general controller when a bus of the power storage system has a ground fault or a short-circuit fault.
Fig. 15 is a flowchart of a procedure of disconnecting a single string and grounding each unit of the string.
Fig. 16 is a flowchart of a procedure of returning a disconnected string to a connected state.
Fig. 17 is an internal circuit diagram of a positive side unit in a power storage system according to a fourth embodiment.
Fig. 18 is an internal circuit diagram of a negative side unit in the power storage system according to the fourth embodiment.
Fig. 19 is an internal circuit diagram of a variation of a unit 13P provided in a positive side string 12P in the power storage system according to the first embodiment.
Fig. 20 is an internal circuit diagram of a variation of a unit 13N provided in a negative side string 12N in the power storage system according to the first embodiment.
Fig. 21 is an internal circuit diagram of a variation of positive side unit 13P in the power storage system according to the fourth embodiment.
Fig. 22 is an internal circuit diagram of a variation of negative side unit 13N in the power storage system according to the fourth embodiment.

### DESCRIPTION OF EMBODIMENTS

Hereinafter, each embodiment will more specifically be described with reference to the drawings. Note that identical or equivalent components are identically denoted and will not be described repeatedly.

### First Embodiment.

### [General Configuration of Power Supply System and Power Storage System]

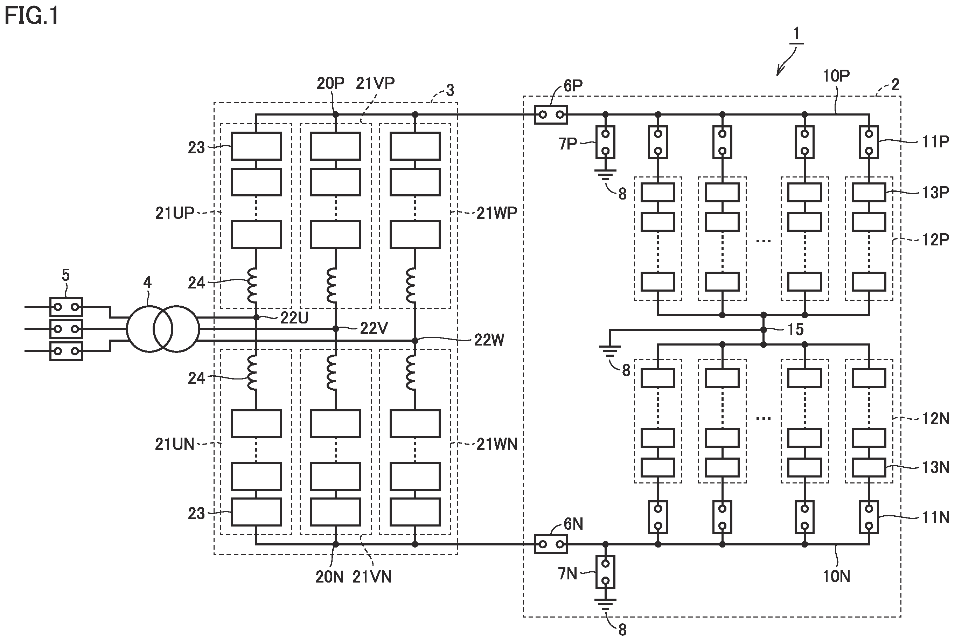

Fig. 1 is a general circuit diagram of a power supply system 1 comprising a power storage system 2 according to a first embodiment. Referring to Fig. 1, power supply system 1 comprises power storage system 2, an AC/DC converter 3, a transformer 4, and an AC circuit breaker 5. Power supply system 1 is connected to a general three-phase AC power system, a private power generator, or a motor generator of an electrically motored mobile object such as an electric vehicle, a battery electric railcar, or an electrically motored aircraft via AC circuit breaker 5 provided on a power lead-in line.

Transformer 4 changes voltage of a general power system in level. AC/DC converter 3 is a bidirectional power converter that converts an alternating current to a direct current and vice versa. Fig. 1 shows a modular multilevel converter (MMC) as one example of AC/DC converter 3. The MMC has a configuration, as will be outlined hereinafter.

Power storage system 2 comprises a plurality of strings 12 connected in parallel, a bus 10 that connects the plurality of strings 12 to AC/DC converter 3, and a disconnector 11 provided between each string 12 and bus 10. Each string 12 comprises a plurality of units 13 connected in series. Unit 13 will also be referred to as a power storage unit. Power storage system 2 further comprises a disconnector 6 provided at a connection point between bus 10 and AC/DC converter 3, and a grounding device 7 for connecting bus 10 to ground 8.

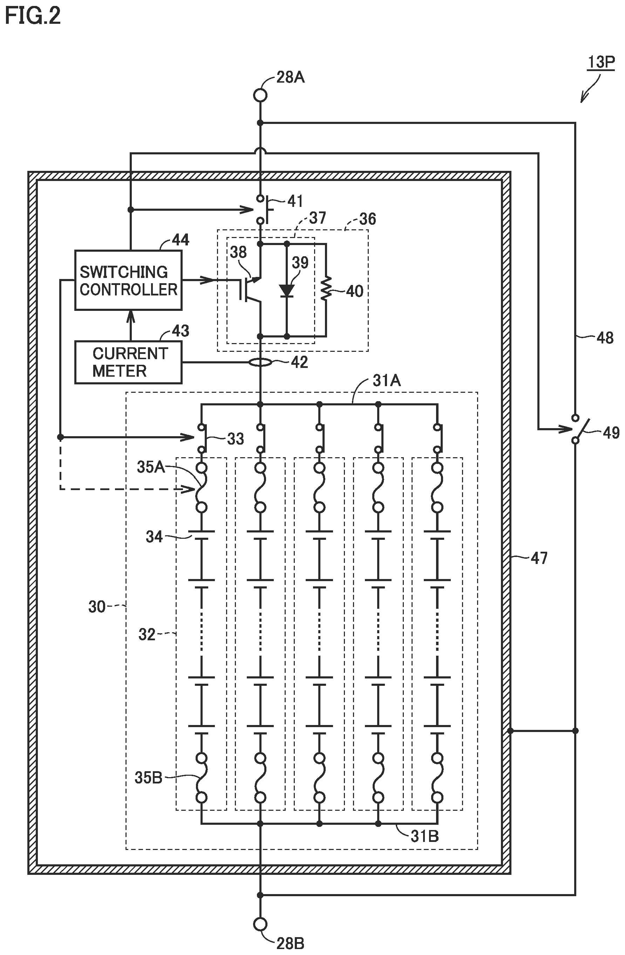

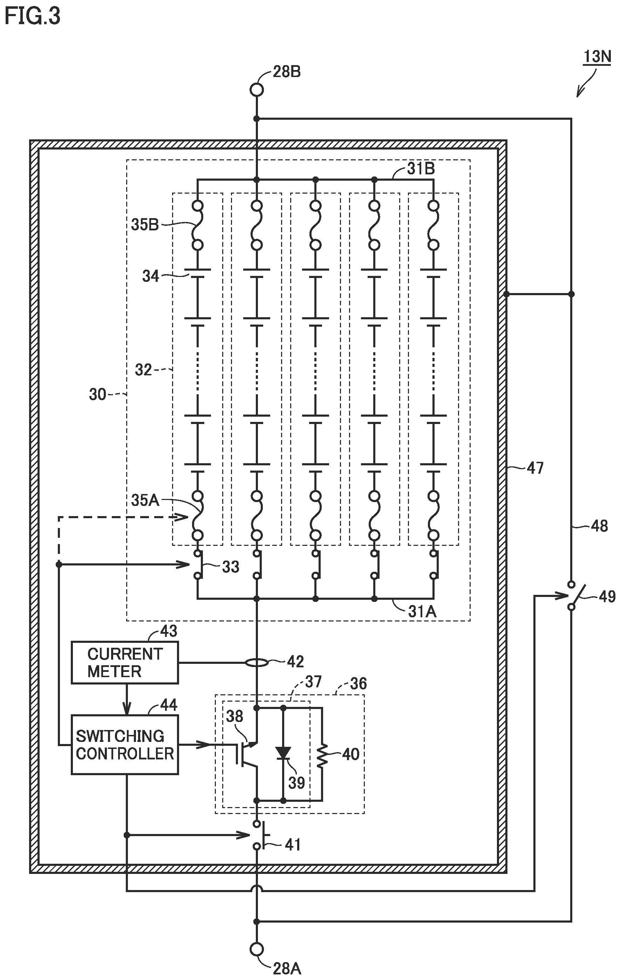

Unit 13 is composed of a plurality of storage batteries connected in series and in parallel and serves as a replacement unit when the number of storage batteries constituting power storage system 2 is increased/decreased or a storage battery is replaced with another or subjected to maintenance. Unit 13 is configured as will more specifically be described hereinafter with reference to Figs. 2 and 3.

Disconnectors 6 and 11 are devices for opening and closing a line through which no load current flows, and are used through manual operation in order to ensure safety for maintenance personnel. A section disconnected by disconnectors 6 and 11 has a charging voltage discharged by a grounding device or the like.

Power storage system 2 of Fig. 1 has the above-described components each provided on each of a positive side and a negative side. The positive side is an upper side in the figure, and the negative side is a lower side in the figure. In the present disclosure, a positive side component is assigned a reference character ending with "P" and a negative side component is assigned a reference character ending with "N". When it is unnecessary to specify whether a component is a positive or negative side component, the component is assigned a reference character without ending with "P" or "N".

Specifically, power storage system 2 comprises a plurality of positive side strings 12P connected in parallel and a plurality of negative side strings 12N connected in parallel. Positive side strings 12P each have a high voltage side end connected to a positive side bus 10P via a corresponding positive side disconnector 11P. Positive side strings 12P each have a low voltage side end connected to a common neutral point 15. Similarly, negative side strings 12N each have a high voltage side end connected to a negative side bus 10N via a corresponding negative side disconnector 11N. Negative side strings 12N each have a low voltage side end connected to common neutral point 15.

Note that in the Fig. 1 power storage system 2, neutral point 15 interconnecting strings 12P and negative side strings 12N is connected to ground 8. Neutral point 15 is not necessarily connected to ground 8. Furthermore, in the present disclosure, for both of the positive and negative sides, a voltage having a large absolute value is referred to as high voltage and a voltage having a small absolute value is referred to as low voltage.

### [Configuration of Positive Side Unit]

Fig. 2 is an internal circuit diagram of unit 13P provided in positive side string 12P. Fig. 2 shows an upper side as a high voltage side and the positive side, and shows a lower side as a low voltage side and the negative side. A current charged to a storage battery flows from the high voltage side to the low voltage side, whereas a current discharged from the storage battery flows from the low voltage side to the high voltage side.

As shown in Fig. 2, unit 13P comprises a high voltage side terminal 28A, a low voltage side terminal 28B, a storage battery group 30 including a plurality of storage batteries 34, a master load switch 41, a current limiting device 36, a current meter 43, a switching controller 44, a bypass circuit 48, and a metal frame 47. In the present disclosure, master load switch 41 is also referred to as a first load switch, current limiting device 36 is also referred to as a first current limiting device, and switching controller 44 is also referred to as an individual controller.

High voltage side terminal 28A and low voltage side terminal 28B are terminals for connecting to adjacent units 13P. Master load switch 41, current limiting device 36, and storage battery group 30 are sequentially connected in series in a direction from high voltage side terminal 28A to low voltage side terminal 28B.

Current meter 43 detects a current flowing between high voltage side terminal 28A and low voltage side terminal 28B via master load switch 41, current limiting device 36, and storage battery group 30. In the case of Fig. 2, current meter 43 detects a current using a current sensor 42 provided on a current path between current limiting device 36 and storage battery group 30.

Storage battery group 30 comprises a plurality of banks 32 connected in parallel between a high voltage side unit bus 31A and a low voltage side unit bus 31B, and a load switch 33 individually provided between each bank 32 and unit bus 31A. Each bank 32 includes a plurality of storage batteries 34 connected in series, and fuses 35A and 35B connected respectively to both ends of the series combination of the plurality of storage batteries 34. One or both of fuses 35A and 35B may have an internal conductive wire melting or breaking in response to an external command to function to interrupt a current, as a pyrofuse does.

Fuses 35A and 35B are required to interrupt a current when a device internal to unit 13, e.g., one of storage batteries 34, has a short circuit failure. In such a case, when it is desired to disconnect only bank 32 including the failed storage battery 34, load switch 33 may be opened. Alternatively, a pyrofuse may be used instead of a general fuse when faster interruption is required to prevent a current from flowing from another parallel bank 32 into a certain bank 32 that has storage battery 34 short-circuited and thus failed. This can interrupt the current without otherwise waiting for the general fuse to be burnt. Alternatively, a breaker may be used instead of the general fuse.

Current limiting device 36 in operation functions to limit a current flowing between high voltage side terminal 28A and storage battery group 30. As one example, current limiting device 36 includes a switch 37 and a current limiting element 40 connected in parallel with switch 37. When current limiting device 36 is not in operation, switch 37 is in the on state, and switch 37 passes a current. When switch 37 is turned off in response to a command issued from switching controller 44, the current is commutated to current limiting element 40 and current limiting device 36 is thus in operation.

For example, a resistor is used as current limiting element 40. The resistor may have constant resistance, or a varistor, a zinc oxide element, or the like may be used as the resistor to present nonlinear resistance.

Switch 37 may be a general mechanical switch that can interrupt a direct current, or a self-commutated semiconductor switching element that can be turned on and off, such as an insulated gate bipolar transistor (IGBT) or a gate commutated turn off (GCT) thyristor. Any of Si, SiC, GaN, and the like may be used as semiconductor material.

When switch 37 is at least one semiconductor element, it may be configured to be capable of interrupting both a current flowing in a direction to charge storage battery group 30 and that flowing in a direction to discharge the storage battery group, or may have such a polarity that the switch can only turn on/off the current flowing in the direction to discharge the storage battery group and constantly passes the current flowing in the direction to charge the storage battery group.

For example, switch 37 shown in Fig. 2 includes a semiconductor switching element 38 composed of an IGBT, and a diode 39 connected in parallel with semiconductor switching element 38. The IGBT and diode 39 have an emitter and an anode, respectively, on the high voltage side, and the IGBT and diode 39 have a collector and a cathode, respectively, on the low voltage side. With such a configuration, regardless of whether the IGBT is turned on or off, a current flowing in a direction to charge storage battery group 30, that is, a direction from high voltage side terminal 28A to low voltage side terminal 28B, flows constantly. In contrast, when the IGBT is turned off, a current flowing in a direction to discharge storage battery group 30, that is, a direction from low voltage side terminal 28B to high voltage side terminal 28A, is interrupted.

In order to be able to turn on and off both the current in the discharging direction and that in the charging direction using a semiconductor element, for example, switch 37 may be configured by connecting in series a parallel combination of semiconductor switching element 38 and diode 39 having the polarity shown in Fig. 2 and a parallel combination of semiconductor switching element 38 and diode 39 having the polarity opposite to that shown in Fig. 2.

Bypass circuit 48 is connected in parallel with a series connection of master load switch 41, current limiting device 36, and storage battery group 30 between high voltage side terminal 28A and low voltage side terminal 28B. Bypass circuit 48 is provided with a bypass switch 49. Bypass switch 49 is normally in an open state, and no current flows through bypass circuit 48. When bypass switch 49 is closed in response to a command issued from switching controller 44, a current flows through bypass circuit 48. Bypass switch 49 may be composed of a single switch, or may be configured by connecting two switches in series, that is, a load switch that passes/interrupts a direct current and a closing switch that can close quickly when closing.

Switching controller 44 controls switch 37, master load switch 41 and bypass switch 49 to open/close the switches based on a value of a current measured by current meter 43. Switching controller 44 may be configured based on a computer including a central processing unit (CPU), a memory, an input/output interface, etc.
Alternatively, switching controller 44 may at least partially be composed of a field programmable gate array (FPGA) or a similar programmable logic device (PLD) and/or an application specific integrated circuit (ASIC) or a similar dedicated integrated circuit.

Furthermore, switching controller 44 may be configured to control load switch 33 corresponding to each bank 32 to open/close the switch. When at least one of fuses 35A and 35B is a pyrofuse, current meter 43 may measure a current by a current sensor provided in a vicinity of the pyrofuse and switching controller 44 may output a signal based on the result of the measurement of the current to open the pyrofuse.

Metal frame 47 is provided to protect the above-described devices. Specifically, the components of unit 13P other than bypass circuit 48 and bypass switch 49 are disposed on metal frame 47 or surrounded by metal frame 47. Metal frame 47 is connected to low voltage side terminal 28B to be equal in potential to low voltage side terminal 28B. Disposing the components of unit 13P as described above is advantageous as doing so can facilitates designing the components of unit 13P for insulation. This is because with respect to the plurality of series-connected units 13P constituting string 12P, unit 13P on a side higher in voltage receives a higher voltage, whereas for insulation of each device disposed inside or on metal frame 47, simply considering a difference in potential between metal frame 47 and each device suffices. Metal frame 47 is per se designed for insulation to also endure high voltage to the ground. Metal frame 47 also serves to provide protection against surges caused by lightning, disturbance and the like.

### [Exemplary Configuration of Negative Side Unit]

Fig. 3 is an internal circuit diagram of unit 13N provided in negative side string 12N. Fig. 3 shows an upper side as the low voltage side and the positive side, and a lower side as the high voltage side and the negative side. A current charged to a storage battery flows from the low voltage side to the high voltage side, whereas a current discharged from the storage battery flows from the high voltage side to the low voltage side.

Except for each polarity of storage battery 34, semiconductor switching element 38 and diode 39, unit 13N of Fig. 3 has a configuration which is an inverted version of that of unit 13P of Fig. 2. Accordingly, identical or equivalent components in the Fig. 3 unit 13N and the Fig. 2 unit 13P are identically denoted and will not be described repeatedly in detail.

Bank 32 is composed of a plurality of storage batteries 34 connected in series to have a positive electrode on the low voltage side (the upper side in the figure) and a negative electrode on the high voltage side (the lower side in the figure).
Furthermore, in current limiting device 36, the IGBT as semiconductor switching element 38 and diode 39 have the emitter and the anode, respectively, on the low voltage side (the upper side in the figure), and the IGBT and diode 39 have the collector and the cathode, respectively, on the high voltage side (the lower side in the figure). With such a configuration of switch 37, regardless of whether semiconductor switching element 38 is turned on or off, a current flowing in a direction to charge storage battery group 30, that is, a direction from low voltage side terminal 28B to high voltage side terminal 28A, flows constantly. In contrast, when semiconductor switching element 38 is turned off, a current flowing in a direction to discharge storage battery group 30, that is, a direction from high voltage side terminal 28A to low voltage side terminal 28B, is interrupted.

### [Unit Disconnecting Operation - Disconnecting Conduction Current Without Instantaneous Interruption]

Hereinafter will be described an operation performed when units 13P and 13N configured as described above have a short-circuit fault between high voltage side terminal 28A and low voltage side terminal 28B.

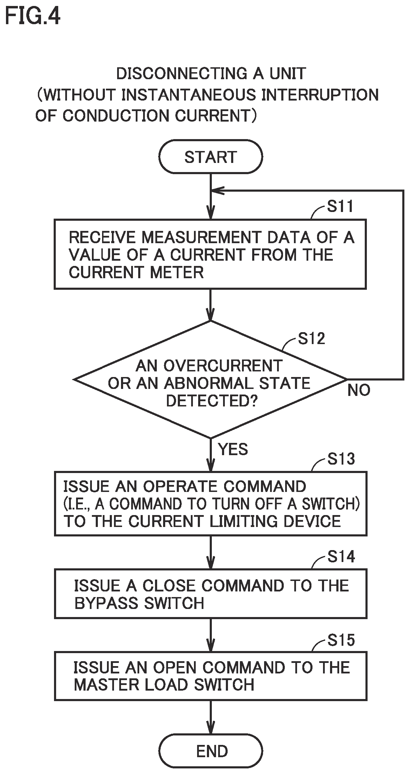

Fig. 4 is a flowchart of an operation of switching controller 44 when a failed unit is disconnected without instantaneous interruption of a conduction current. Current meter 43 of Figs. 2 and 3 constantly measures a current and transmits data of a value of the measured current to switching controller 44.

In the present disclosure, when unit 13 is in a state allowing storage battery group 30 to be charged/discharged, the unit is in a state referred to as a state in use, whereas when unit 13 is disconnected and thus in a state disallowing storage battery group 30 to be charged/discharged, the unit is in a state referred to as a stopped state. When unit 13 is in the state in use, master load switch 41 is in a closed state, current limiting device 36 is in a non-operative state, and bypass switch 49 is in the open state. When unit 13 is in the stopped state, master load switch 41 is in the open state, current limiting device 36 is in an operative state, and bypass switch 49 is in a closed state. When the flow shown in Fig. 4 starts, unit 13 is in the operative state.

In step S11, switching controller 44 receives measurement data of a value of a current from current meter 43. Subsequently, in step S12, switching controller 44 determines whether the measured current's value exceeds a predetermined threshold value, that is, whether it indicates an overcurrent. When switching controller 44 senses that the measured current's value exceeds the predetermined threshold value, the switching controller determines that a short-circuit fault has occurred (step S12).

Alternatively, units 13P and 13N may be provided with a temperature sensor (not shown) that measures a conductor's temperature and the storage cell's temperature and/or a sensor (not shown) that senses an impact or vibration caused by an earthquake or when an object collides. Switching controller 44 may determine that an abnormal state occurs when the temperature sensor senses a value exceeding a threshold value or the impact or vibration sensor senses a value exceeding a threshold value (step S12).

When switching controller 44 detects the overcurrent or the abnormal state (YES in step S12), the switching controller proceeds to step S13. When switching controller 44 detects neither the overcurrent nor the abnormal state (NO in step S12), the switching controller returns to step S11.

When switching controller 44 detects the overcurrent or the abnormal state (YES in step S12), the switching controller initially in step S13 issues an operate command to current limiting device 36. Upon receiving the operate command, current limiting device 36 turns off switch 37 to commutate a current to current limiting element 40. This suppresses a current flowing through the unit.

Subsequently, in step S14, switching controller 44 issues a close command to bypass switch 49. When bypass switch 49 is closed, storage battery 34 appears to short-circuit, however, current limiting element 40 of current limiting device 36 suppresses a current, and a large current will not flow. For example, when bank 32 is charged with a voltage of 1000 V, using a resistive element of about 2Ω as current limiting element 40 provides a current having a value of about 500 A. If current limiting device 36 is absent, a short circuit current may reach an order of kA. Even when an arc is caused by a short circuit caused between high voltage side terminal 28A and low voltage side terminal 28B, closing bypass switch 49 allows the arc to be free from voltage, and the arc is thus extinguished.

Subsequently, in step S15, switching controller 44 issues an open command to master load switch 41 to open master load switch 41. This completes the process of disconnecting a failed unit 13 and the unit 13 thus enters the stopped state.

As described above, when unit 13P or 13N having the configuration shown in Figs. 2 and 3 is operated through the above-described procedure, unit 13P or 13N can be disconnected without interrupting a conduction current and operation of power storage system 2 can be continued. If suppressing a large current when bypass switch 49 is closed is aimed at, as described above, switch 37 of current limiting device 36 may only be capable of interrupting a current flowing in a direction to discharge storage battery 34.

In contrast to a short-circuit fault caused in units 13P and 13N between high voltage side terminal 28A and low voltage side terminal 28B as described above, even when an error or a defect occurs in the internal circuits of units 13P and 13N, disconnecting units 13P and 13N without instantaneous interruption in the above-described manner allows power storage system 2 to continue to operate.

Furthermore, in the above procedure, it is desirable that current limiting device 36 operate at a speed to operate before fuses 35A and 35B melt. Even when bypass switch 49 is closed and such a condition results that storage battery 34 is short-circuited, a current can be limited before the current reaches a current that melts fuses 35A and 35B. This can prevent fuses 35A and 35B from melting so that operation cannot be continued when unit 13 once disconnected is returned.

### [Unit Disconnecting Operation - Temporarily Interrupting a Conduction Current]

When it is unnecessary to be free of instantaneous interruption of a conduction current of string 12 including a failed unit 13, it is unnecessary to operate current limiting device 36. Hereinafter, an operation of switching controller 44 for this case will be described.

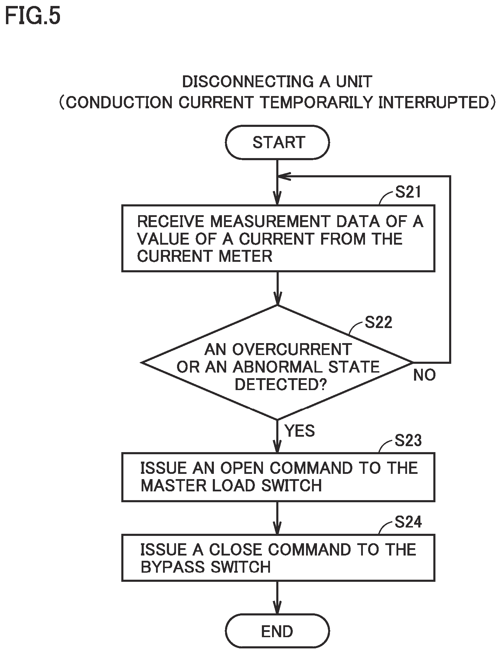

Fig. 5 is a flowchart of an operation of switching controller 44 when a conduction current is temporarily interrupted and a failed unit is disconnected. Steps S21 and S22 in Fig. 5 are the same as steps S11 and S12 in Fig. 4, respectively, and accordingly, will not be described repeatedly in detail. In step S22, when switching controller 44 does not detect an overcurrent or an abnormal state (NO in step S22), the switching controller returns to step S21.

In contrast, when switching controller 44 detects an overcurrent or an abnormal state in step S22 (YES in step S22), the switching controller proceeds to step S23. In step S23, switching controller 44 initially issues an open command to master load switch 41 to open master load switch 41. This interrupts a conduction current flowing through string 12 including the failed unit 13.

Subsequently, in step S24, switching controller 44 issues a close command to bypass switch 49 to close bypass switch 49. This completes disconnecting the failed unit 13.

### [Unit Returning Operation]

A procedure of returning a disconnected unit 13 will now be described. The procedure of returning unit 13 is basically the reverse of the disconnection procedure.

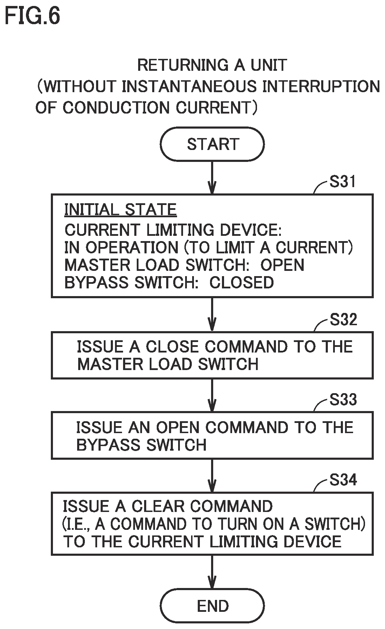

Fig. 6 is a flowchart of an operation of switching controller 44 in returning a unit without instantaneous interruption of a conduction current. When the disconnected unit 13 is in an initial state (step S31), current limiting device 36 is in operation to limit a current (i.e., switch 37 is in the off state), master load switch 41 is in the open state, and bypass switch 49 is in the closed state.

Initially, in step S32, switching controller 44 issues a close command to master load switch 41 to close master load switch 41. Subsequently, in step S33, switching controller 44 issues an open command to bypass switch 49 to open bypass switch 49. Subsequently, in step S34, switching controller 44 issues a clear command (i.e., a command to turn on switch 37) to current limiting device 36 to set current limiting device 36 to a normal conductive state allowing switch 37 to pass a conduction current (i.e., the non-operative state). Thus, returning unit 13 completes.

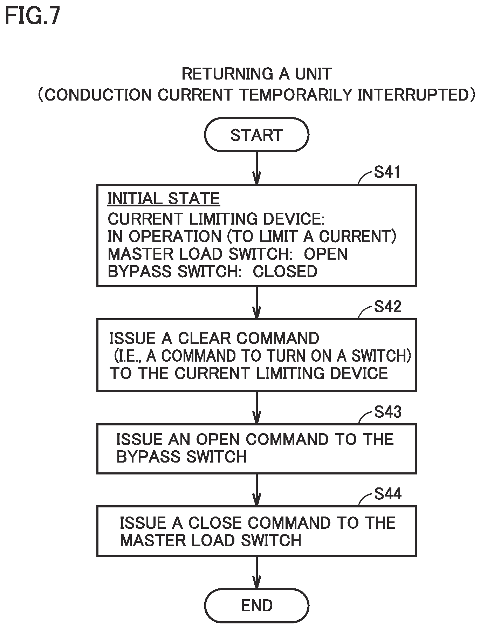

Fig. 7 is a flowchart of an operation of switching controller 44 when a conduction current is temporarily interrupted and a unit is returned. A disconnected unit 13 is in the initial state (step S41), as described with reference to Fig. 6 (step S31). Specifically, current limiting device 36 is in operation to limit a current (that is, switch 37 is in the off state), master load switch 41 is in the open state, and bypass switch 49 is in the closed state.

Initially, in step S42, switching controller 44 issues a command to current limiting device 36 to clear the current limiting operation (i.e., a command to turn on switch 37). Thus, current limiting device 36 enters the normal conductive state allowing switch 37 to pass a conduction current. Subsequently, in step S43, switching controller 44 issues an open command to bypass switch 49 to open bypass switch 49. This interrupts a conduction current flowing through string 12 including unit 13 to be returned. Subsequently, in step S44, switching controller 44 issues a close command to master load switch 41 to close master load switch 41. This completes returning unit 13 and a conduction current again flows through string 12 including that unit 13.

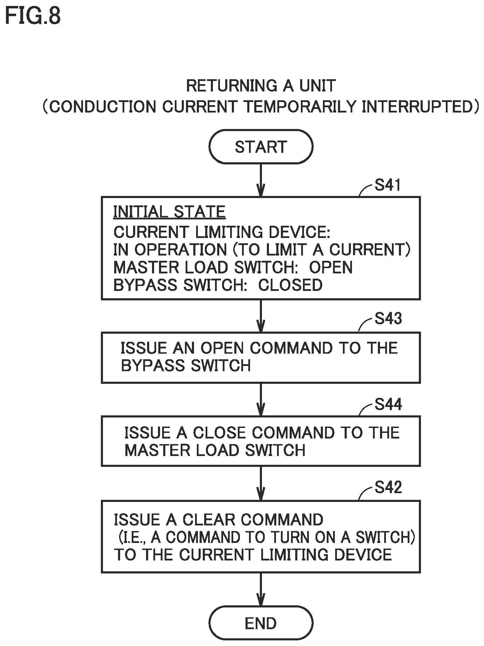

Fig. 8 is a flowchart of a variation of Fig. 7. Any step in the flowchart of Fig. 8 corresponding to that in Fig. 7 is identically denoted. As shown in Fig. 8, the current limiting operation of current limiting device 36 in step S42 may be cleared (that is, switch 37 may be turned on) after step S43 of opening bypass switch 49 and step S44 of closing master load switch 41.

### [Exemplary Configuration of AC/DC Converter]

Hereinafter, an exemplary configuration of AC/DC converter 3 of Fig. 1 will briefly be described. As an example, for Fig. 1, AC/DC converter 3 is composed of a modular multi-level converter including a plurality of cascaded unit converters 23. Unit converter 23 will also be referred to as a converter cell or a sub-module. AC/DC converter 3 is not limited to the modular multilevel converter.

As shown in Fig. 1, AC/DC converter 3 includes a positive DC terminal 20P, a negative DC terminal 20N, AC connections 22 (22U, 22V, 22W) for the respective phases, upper arm circuits 21U (21UP, 21VP, 21WP) for the respective phases, and lower arm circuits 21N (21UN, 21VN, 21WN) for the respective phases. Upper arm circuit 21U and lower arm circuit 21N are collectively referred to as an arm circuit 21.

Positive DC terminal 20P is connected to positive side bus 10P of power storage system 2 via disconnector 6P. Negative DC terminal 20N is connected to negative side bus 10N of power storage system 2 via disconnector 6N. U-phase AC connection 22U, V-phase AC connection 22V, and W-phase AC connection 22W are connected to an AC power system, a motor generator of a mobile object, or the like via transformer 4 and AC circuit breaker 5.

Upper arm circuit 21U for each phase is connected between AC connection 22 for the corresponding phase and positive DC terminal 20P. Lower arm circuit 21N for each phase is connected between AC connection 22 for the corresponding phase and negative DC terminal 20N. Each arm circuit 21 includes a plurality of cascaded unit converters 23 and a reactor 24. The plurality of unit converters 23 and reactor 24 are connected in series. Reactor 24 may be inserted at any position in arm circuit 21.

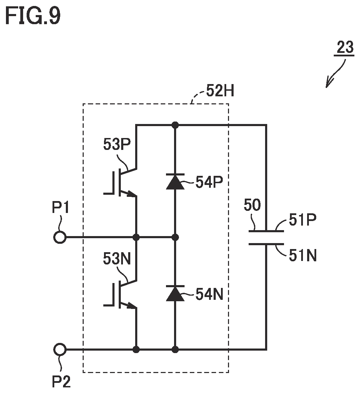

Fig. 9 is a circuit diagram showing an example of unit converter 23 of Fig. 1. Unit converter 23 of Fig. 9 includes paired input/output terminals P1 and P2, a half bridge circuit 52H, and a power storage element 50 (representatively, a capacitor).

Paired input/output terminals P1 and P2 are provided to connect to an adjacent unit converter 23, positive DC terminal 20P, negative DC terminal 20N, AC connections 22U, 22V and 22W, etc. Typically, input/output terminal P1 is connected to input/output terminal P2 of unit converter 23 adjacent on the positive side. Input/output terminal P2 is connected to input/output terminal P1 of unit converter 23 adjacent on the negative side.

Half bridge circuit 52H includes semiconductor switching elements 53P and 53N and diodes 54P and 54N. As semiconductor switching elements 53P and 53N is used, for example, an insulated gate bipolar transistor (IGBT), a gate commutated turn-off thyristor (GCT), or a similar self-commutated switching element controllable for both an on operation and an off operation.

As shown in Fig. 9, semiconductor switching element 53P is connected between input/output terminal P1 and a positive terminal 51P of power storage element 50. Semiconductor switching element 53N is connected between input/output terminal P1 and input/output terminal P2. Input/output terminal P2 is further connected to a negative terminal 51N of power storage element 50. Diodes 54P and 54N are connected in parallel with semiconductor switching elements 53P and 53N, respectively, in a direction of reverse bias.

The above configuration allows semiconductor switching elements 53P and 53N to be controlled to alternately turn on to output zero voltage and positive voltage (that is, the voltage of power storage element 50) between paired input/output terminals P1 and P2. Half-bridge circuit 52H shown in Fig. 9 may be replaced with a full-bridge circuit, or a full-bridge circuit having arms with one arm composed of a diode alone, or a three quarter bridge circuit.

AC/DC converter 3 is generally controlled by a control circuit (not shown) which detects an AC voltage and an AC current on the AC side, a DC voltage and a DC current on the DC side, a current flowing through each arm circuit 21, a voltage of power storage element 50 of each unit converter 23, and the like. Based on these detection values, the control circuit controls semiconductor switching elements 53P and 53N that are constituents of each unit converter 23 through phase shift pulse width modulation (PWM) to perform bidirectional DC/AC conversion.

### [Effects of First Embodiment]

When power storage system 2 configured as described above has a constituent unit 13 short-circuited and thus failed, current limiting device 36 provided for the failed unit 13 suppresses a short-circuit current and thereafter bypass switch 49 is closed. This allows a current path to be switched from a main circuit of unit 13 to bypass circuit 48 without an instantaneous interruption, and thus allows power storage system 2 to continue to operate when a fault occurs. Thereafter, the failed unit 13 has its master load switch 41 opened, and the short-circuit current no longer flows and the fault is eliminated. Furthermore, even if a current flows in from another string 12 connected in parallel with string 12 including the failed unit 13, the current flows through bypass circuit 48 and thus has no effect on storage battery 34.

Even when an arc discharge is caused by a short-circuit fault in one unit 13 between high voltage side terminal 28A and low voltage side terminal 28B, closing bypass switch 49 zeros voltage between high voltage side terminal 28A and low voltage side terminal 28B and thus extinguishes the arc discharge. The short-circuit fault is thus quickly eliminated.

### Second Embodiment.

While power storage system 2 according to the first embodiment is provided with master load switch 41 and current limiting device 36 for each unit 13, power storage system 2 according to a second embodiment is further provided with a load switch 61 and a current limiting device 62 similar in configuration to master load switch 41 and current limiting device 36 for each string 12. This will more specifically be descried hereinafter with reference to figures. In the present disclosure, load switch 61 is also referred to as a second load switch, and current limiting device 62 is also referred to as a second current limiting device.

### [Configuration of Power Storage System]

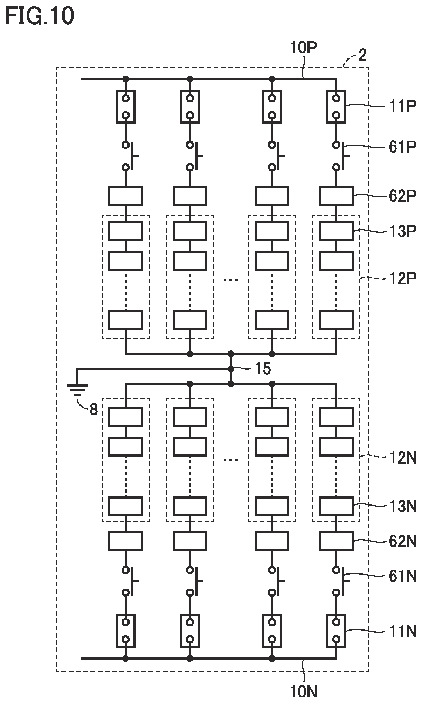

Fig. 10 is a circuit diagram of an exemplary configuration of power storage system 2 according to the second embodiment. The Fig. 10 power storage system 2 differs from the Fig. 1 power storage system 2 in that the former further includes a plurality of positive side load switches 61P, a plurality of positive side current limiting devices 62P, a plurality of negative side load switches 61N, and a plurality of negative side current limiting devices 62.

Each positive side load switch 61P and each positive side current limiting device 62P are connected in series between a high voltage side of a corresponding one of the plurality of positive side strings 12P and a corresponding one of the plurality of positive side disconnectors 11P. Similarly, each negative side load switch 61N and each negative side current limiting device 62N are connected in series between a high voltage side of a corresponding one of the plurality of negative side strings 12N and a corresponding one of the plurality of negative side disconnectors 11N.

In the following description, positive side load switch 61P and negative side load switch 61N will collectively be referred to as a load switch 61, and positive side current limiting device 62P and negative side current limiting device 62N will collectively be referred to as a current limiting device 62. The remainder in configuration in Fig. 10 is similar to that in configuration of power storage system 2 of Fig. 1, and accordingly, identical or equivalent components are identically denoted and will not be described repeatedly.

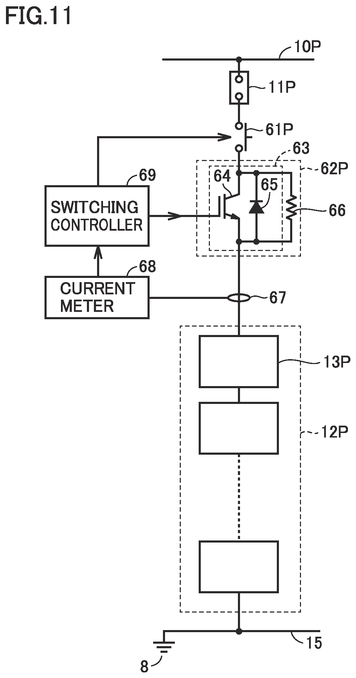

Fig. 11 is an enlarged diagram of a portion of power storage system 2 of Fig. 10 corresponding to a single positive side string 12P. Fig. 11 shows an upper side as the high voltage side and the positive side, and shows a lower side as the low voltage side and the negative side. A current charged to storage battery 34 constituting each unit 13P flows from the high voltage side to the low voltage side, whereas a current discharged from storage battery 34 flows from the low voltage side to the high voltage side.

As shown in Fig. 11, power storage system 2 further includes a current meter 68 and a switching controller 69 in addition to disconnector 11P, load switch 61P, and current limiting device 62P of Fig. 10 as a configuration for each positive side string 12P.

Load switch 61P functions to interrupt a direct current of about a rated current. Current limiting device 62 functions to limit a current similarly as current limiting device 36 provided in each unit 13 does. As one example, current limiting device 62 includes a switch 63 and a current limiting element 66 (e.g., a resistor) connected in parallel with switch 63. Normally, switch 63 is in the on state, and switch 63 passes a current. When switch 63 is turned off in response to a command received from switching controller 69, a current is commutated to current limiting element 66.

Switch 63 may be a mechanical switch or a semiconductor switch. When the semiconductor switch is used, the switch may have such a polarity that the switch can only turn on/off a current flowing in a direction to charge the storage batteries (i.e., a direction from positive side bus 10P to neutral point 15) and the switch constantly passes a current flowing in a direction to discharge the storage batteries. For example, as shown in Fig. 11, switch 63 includes a semiconductor switching element 64 composed of an IGBT, and a diode 65 connected in parallel with the semiconductor switching element. The IGBT and diode 65 have a collector and a cathode, respectively, connected to the positive side (or the high voltage side), and the IGBT and diode 65 have an emitter and an anode, respectively, connected to the neutral point side (or the low voltage side).

Current meter 68 detects a current flowing from positive side bus 10P to a corresponding string 12P. For Fig. 11, current meter 68 detects a current using a current sensor 67 provided on a current path between current limiting device 62P and positive side string 12P.

Switching controller 69 controls switch 63 and load switch 61P to open/close the switches based on a value of a current measured by current meter 68. For example, when current meter 68 detects an overcurrent exceeding a threshold value, switching controller 69 turns off switch 63 and furthermore, opens load switch 61P.

Switching controller 69 may be configured based on a computer including a CPU, a memory, an input/output interface, etc. Alternatively, switching controller 69 may at least partially be composed of an FPGA or a similar PLD and/or an ASIC or a similar dedicated circuit.

While disconnector 11P is basically manually operated, it may be configured to be remotely operable from switching controller 69.

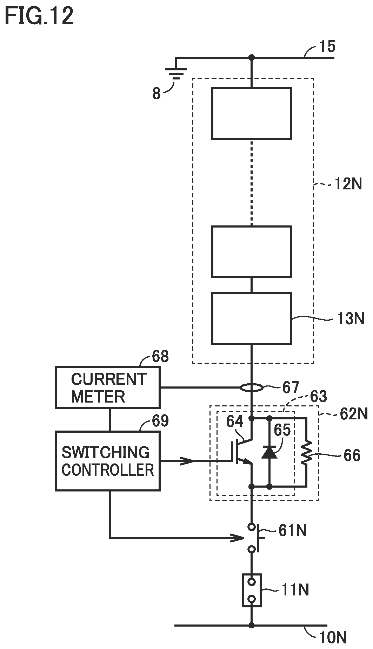

Fig. 12 is an enlarged diagram of a portion of power storage system 2 of Fig. 10 corresponding to a single negative side string 12N. Fig. 12 shows an upper side as the low voltage side and the positive side, and a lower side as the high voltage side and the negative side. A current charged to storage battery 34 constituting each unit 13N flows from the low voltage side to the high voltage side, whereas a current discharged from storage battery 34 flows from the high voltage side to the low voltage side. As illustrated in Fig. 12, power storage system 2 further includes current meter 68 and switching controller 69 in addition to disconnector 11N, load switch 61P, and current limiting device 62N illustrated in Fig. 10 as a configuration for each negative side string 12N.

The Fig. 12 configuration on the negative side is an inverted version of that on the positive side shown in Fig. 11 except for the polarity of storage battery 34, semiconductor switching element 64, and diode 65. Accordingly, identical or equivalent components in the Fig. 12 configuration on the negative side and the Fig. 11 configuration on the positive side are identically or similarly denoted (i.e., assigned a reference character with an ending P replaced with an ending N) and will not be described repeatedly in detail.

Switch 63 serving as a constituent of current limiting device 62N in Fig. 12 includes a semiconductor switching element 64 composed of an IGBT and a diode 65 connected in parallel with the semiconductor switching element. The IGBT and diode 65 have a collector and a cathode, respectively, connected on the neutral point side (or the low voltage side), and IGBT and diode 65 have an emitter and an anode, respectively, connected on the negative side (or the high voltage side). Therefore, the switch can only turn on/off a current flowing in a direction to charge the storage batteries (that is, a direction from neutral point 15 to negative side bus 10N) and the switch constantly passes a current flowing in a direction to discharge the storage batteries.

### [Effects of Second Embodiment]

As described above, power storage system 2 of the second embodiment is provided with current limiting device 62 in series with each string 12. This can suppress a large current otherwise generated when string 12 has a certain unit 13 short-circuited and thus failed, and accordingly, bypassed. In this case, not only a current flowing in from AC/DC converter 3 but a current flowing in from another healthy string 12 connected in parallel with string 12 including the failed unit 13 can also be suppressed. This can protect the healthy string 12 from damage.

### Third Embodiment.

### [General Configuration of Power Supply System and Power Storage System]

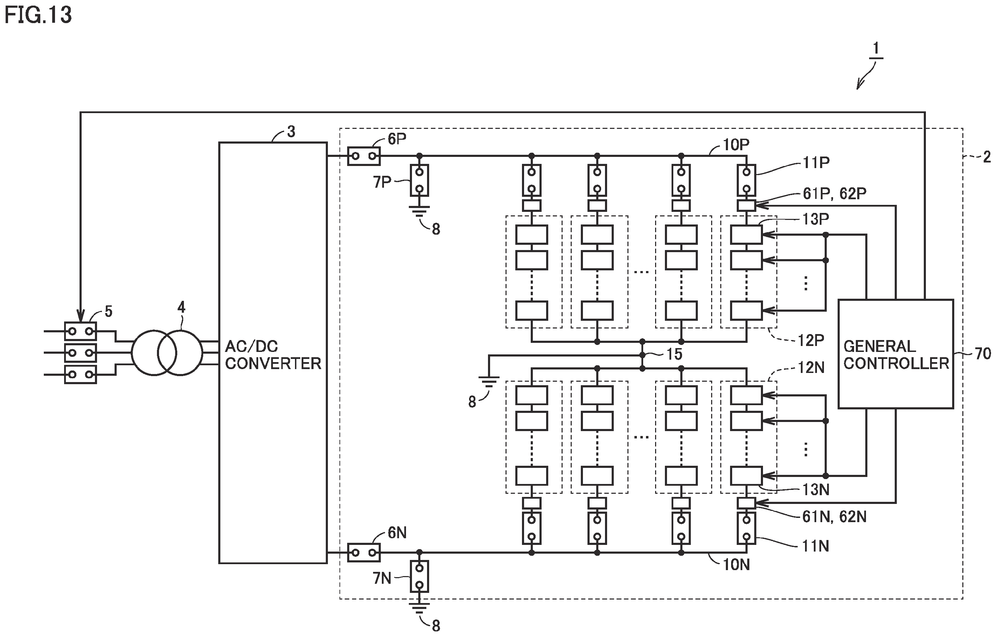

Fig. 13 is a general circuit diagram of power supply system 1 including power storage system 2 according to a third embodiment. Power storage system 2 of Fig. 13 differs from power storage systems 2 of Figs. 1 and 10 in that the former further comprises a general controller 70.

General controller 70 controls each unit 13 (13P, 13N), load switch 61 (61P, 61N) for a string, and current limiting device 62 (62P, 62N) for the string to open/close them. Furthermore, general controller 70 controls AC circuit breaker 5 to open/close it.

Herein, general controller 70 may have a function to directly control master load switch 41, current limiting device 36, load switch 33, and fuses 35A and 35B which are composed of pyrofuses, that constitute each unit 13. Alternatively, these switching devices may be directly controlled by switching controller 44 provided for each unit 13 and general controller 70 may output a control command to switching controller 44 to generally control each unit 13.

Similarly, general controller 70 may have a function to directly control load switch 61 and current limiting device 62 corresponding to each string 12. Alternatively, these switching devices may be directly controlled by switching controller 69 provided for each string 12 and general controller 70 may output a control command to switching controller 69 to generally control these switching devices.

Note that general controller 70 may be configured based on a computer including a CPU, a memory, an input/output interface, etc. Alternatively, general controller 70 may at least partially be composed of an FPGA or a similar PLD and/or an ASIC or a similar dedicated circuit.

While disconnectors 6 and 11 and grounding device 7 are basically manually operated, they may be configured to be remotely controllable from general controller 70.

### [Short Circuit or Ground Fault on Bus 10 of Power Storage System 2]

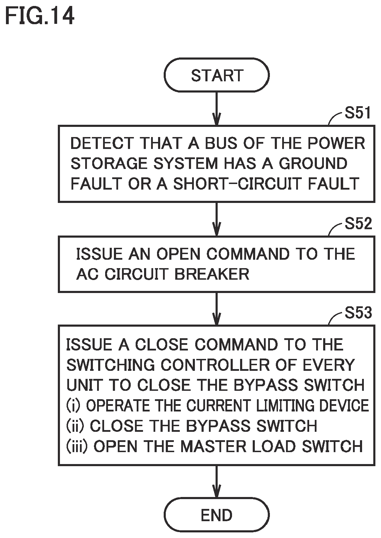

For example when bus 10 of power storage system 2 has a ground fault or a short-circuit fault, using the above-described function of general controller 70 allows general controller 70 to apply control to eliminate the ground fault or the short-circuit fault. This will more specifically be described hereinafter with reference to the flowchart of Fig. 14.

Fig. 14 is a flowchart of a protective operation of general controller 70 when bus 10 of power storage system 2 has a ground fault or a short-circuit fault. With reference to Fig. 14, in step S51, general controller 70 detects that bus 10 of power storage system 2 has a ground fault or a short-circuit fault based on a result of detection from a protection relay (not shown) provided on bus 10.

Subsequently, in step S52, general controller 70 issues an open command to AC circuit breaker 5 to open AC circuit breaker 5. This disconnects power storage system 2 from an external AC circuit.

Subsequently, in step S53, general controller 70 issues a close command to switching controller 44 of every unit 13 to close bypass switch 49. In response to the close command, switching controller 44 (i) operates current limiting device 36, (ii) closes bypass switch 49, and (iii) opens master load switch 41, as has been described with reference to Fig. 4 for steps S13 to S15. This can ground the location of the ground fault of bus 10 and hence stop a current flowing in from string 12 to the location of the ground fault. As a result, an arc is extinguished and the fault can be eliminated.

In step S53, general controller 70 may directly control (i) operating current limiting device 36, (ii) closing bypass switch 49, and (iii) opening master load switch 41 in each unit 13. Furthermore, steps S52 and S53 may be performed simultaneously.

### [Disconnecting and Grounding a String]

As shown in Fig. 13, when power storage system 2 has neutral point 15 connected to ground 8, and a certain string 12 (12P or 12N) is to be grounded, closing bypass switch 49 of every unit 13 included in that string 12 suffices. As has been described with reference to Figs. 2 and 3, each unit 13 has high voltage side terminal 28A and low voltage side terminal 28B interconnected via bypass circuit 48 and has metal frame 47 connected to low voltage side terminal 28B. Therefore, closing bypass switch 49 of every unit 13 constituting string 12 connects the main circuit and metal frame 47 of every unit 13 to ground 8. In order to reduce voltage fluctuation to reduce a surge caused when the connection is made to ground 8, each unit 13 has bypass switch 49 closed in an order from bypass switch 49 of unit 13 higher in voltage to bypass switch 49 of unit 13 lower in voltage.

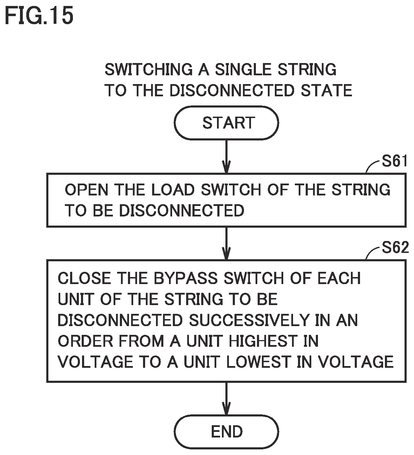

Fig. 15 is a flowchart of a procedure of disconnecting a single string 12 and grounding each unit 13 of that string 12. In that case, another string 12 connected in parallel with the disconnected string 12 can be used as a power storage system.

With reference to Fig. 15, initially, in step S61, general controller 70 directly issues an open command to load switch 61 to open load switch 61, or, in response to a control command issued from general controller 70, switching controller 69 corresponding to the single string 12 issues the open command to the load switch to open the load switch.

Subsequently, in step S62, general controller 70 directly or switching controller 44 of each unit 13 in response to a control command issued from general controller 70 closes bypass switch 49 of each unit 13 successively in a direction from the high voltage side to the low voltage side. Master load switch 41 of each unit 13 is in the closed state, and switch 37 of current limiting device 36 of each unit 13 is in the on state. Through the above procedure, the string 12 of interest is disconnected and the string 12 of interest also has each unit 13 grounded.

In the present disclosure, as described above, when load switch 61 corresponding to a certain string 12 is opened and bypass switch 49 of every unit 13 of that string 12 is in the closed state, the string 12 is referred to as being in a disconnected state. In contrast, when load switch 61 corresponding to a certain string 12 is closed and bypass switch 49 of every unit 13 constituting that string 12 is in the open state, the string 12 is referred to as being in a connected state.

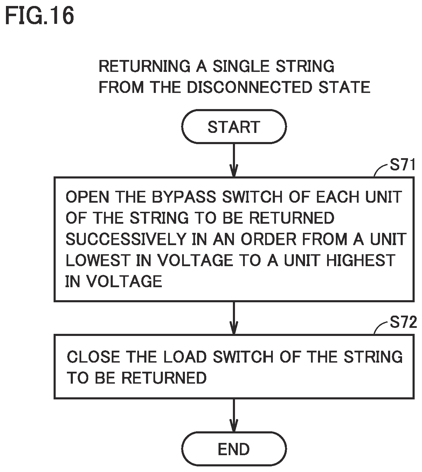

Fig. 16 is a flowchart of a procedure for returning a disconnected string 12 to the connected state. With reference to Fig. 16, initially, in step S71, general controller 70 directly or switching controller 44 of each unit 13 in response to a control command issued from general controller 70 opens bypass switch 49 of each unit 13 successively in a direction from the high voltage side to the low voltage side. Master load switch 41 of each unit 13 is in the closed state, and switch 37 of current limiting device 36 of each unit 13 is in the on state.

Subsequently, in step S72, general controller 70 directly issues a close command to load switch 61 to close load switch 61, or, in response to a control command issued from general controller 70, switching controller 69 corresponding to that string 12 issues the close command to the load switch to close the load switch. The above procedure returns the string 12 to a conductive state.

### Fourth Embodiment.

In a fourth embodiment will be described a means for closing bypass switch 49 of a single unit 13 and thereafter grounding that unit 13 alone.

### [Configuration of Unit]

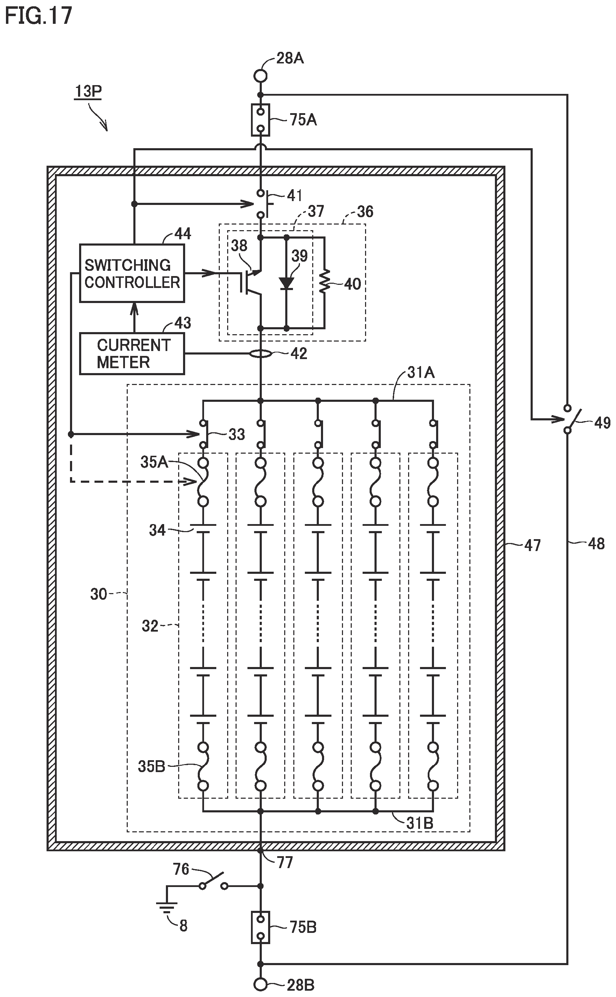

Fig. 17 is an internal circuit diagram of positive side unit 13P in a power storage system according to the fourth embodiment. Fig. 17 shows an upper side as the high voltage side and the positive side, and shows a lower side as the low voltage side and the negative side.

Unit 13P shown in Fig. 17 differs from unit 13P shown in Fig. 2 in that the former further comprises first and second high voltage disconnectors 75A and 75B and a grounding device 76. Specifically, in Fig. 17, metal frame 47 is connected to a node 77 on a current path between low voltage side terminal 28B and low voltage side unit bus 31B of storage battery group 30. First high voltage disconnector 75A is connected between high voltage side terminal 28A and master load switch 41 (that is, at a position closer to high voltage side terminal 28A than master load switch 41 and current limiting device 36 are). Second high voltage disconnector 75B is connected between low voltage side terminal 28B and node 77 to which metal frame 47 is connected. Bypass circuit 48 is connected between high voltage side terminal 28A and low voltage side terminal 28B so as to be also in parallel with high voltage disconnectors 75A and 75B. In the present disclosure, first high voltage disconnector 75A is also referred to as a first disconnector, and second high voltage disconnector 75B is also referred to as a second disconnector.

Grounding device 76 is connected between ground 8 and a current path extending between high voltage disconnector 75B and node 77. That is, a current path between low voltage side terminal 28B and storage battery group 30 is fastened to metal frame 47 between the location of the connection of grounding device 76 and storage battery group 30. Thus, metal frame 47 equals the main circuit of unit 13P in potential.

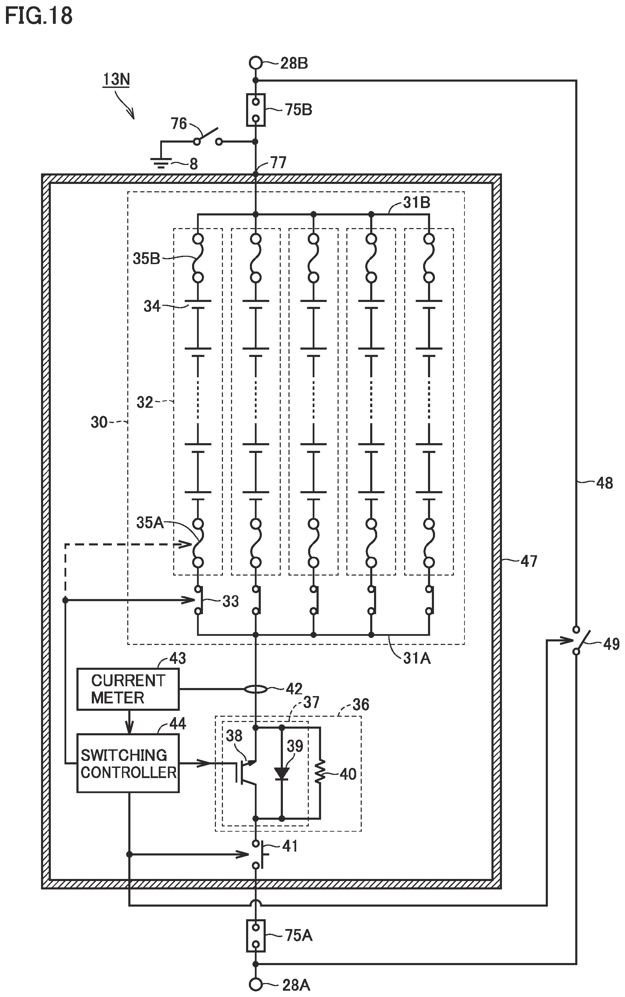

Fig. 18 is an internal circuit diagram of negative side unit 13N in the power storage system according to the fourth embodiment. Fig. 18 shows an upper side as the low voltage side and the positive side, and a lower side as the high voltage side and the negative side.

As well as in Fig. 17, unit 13N shown in Fig. 18 differs from unit 13N shown in Fig. 3 in that the former further comprises first and second high voltage disconnectors 75A and 75B and grounding device 76. Specifically, first high voltage disconnector 75A is connected between high voltage side terminal 28A and master load switch 41. Metal frame 47 is connected to node 77 on a current path between low voltage side terminal 28B and storage battery group 30. Second high voltage disconnector 75B is connected between low voltage side terminal 28B and node 77. Bypass circuit 48 is connected between high voltage side terminal 28A and low voltage side terminal 28B so as to be also in parallel with high voltage disconnectors 75A and 75B.

Grounding device 76 is connected to a current path between high voltage disconnector 75B and node 77. That is, a current path between low voltage side terminal 28B and storage battery group 30 is fastened to metal frame 47 between the location of the connection of grounding device 76 and storage battery group 30. Thus, metal frame 47 equals the main circuit of unit 13P in potential.

### [Operation of Disconnecting and Grounding a Single Unit]

Hereinafter, a procedure will be described for disconnecting unit 13 (13P, 13N) having the above-described configuration, and subsequently grounding the unit alone.

Initially, bypass switch 49 of unit 13 to be disconnected is closed through the steps S13 to S15 of Fig. 4 or the steps S23 and S24 of Fig. 5. Subsequently, high voltage disconnectors 75A and 75B provided for unit 13 of interest are opened, and grounding device 76 is then closed.

Thus, unit 13 of interest alone has its main circuit grounded, and any other unit 13 connected in series with unit 13 of interest is ungrounded. This allows unit 13 of interest to be alone subjected to maintenance safely or has a storage battery removed from the main circuit while power storage system 2 generally continues to operate.

While high voltage disconnectors 75A and 75B and grounding device 76 are basically manually operated, they may be configured to be remotely operable by switching controller 44 and/or general controller 70.

### Fifth Embodiment.

In a fifth embodiment will be described a variation in configuration of units 13P and 13N in the first embodiment described with reference to in Figs. 2 and 3 and a variation in configuration of units 13P and 13N in the fourth embodiment described with reference to Figs. 17 and 18.

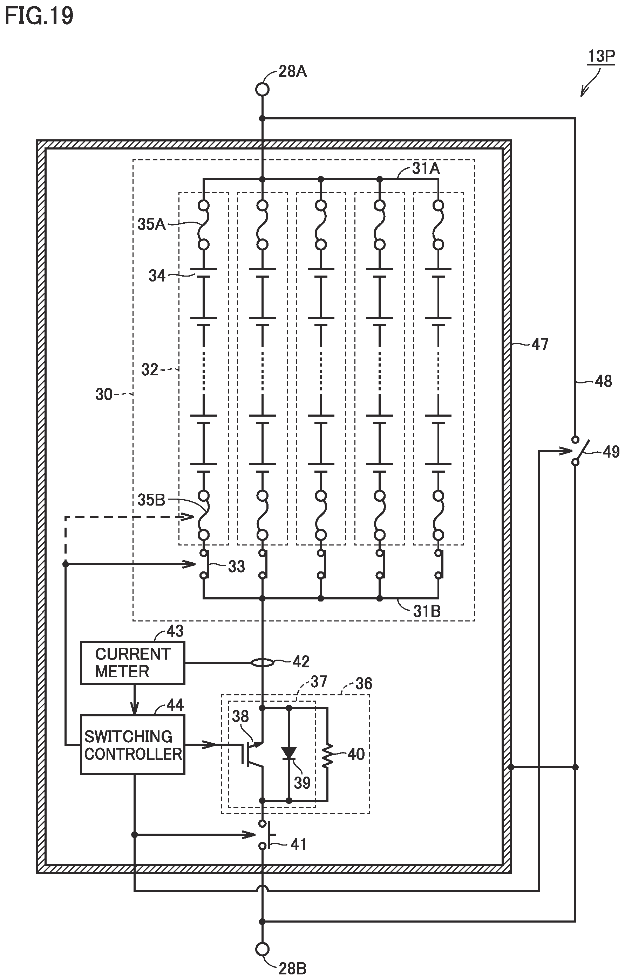

Fig. 19 is an internal circuit diagram of a variation of unit 13P provided in positive side string 12P in the power storage system according to the first embodiment. Fig. 19 shows an upper side as the high voltage side and the positive side, and shows a lower side as the low voltage side and the negative side.

In the example of Fig. 19, storage battery group 30, current limiting device 36, and master load switch 41 are connected in series in this order in a direction from high voltage side terminal 28A to low voltage side terminal 28B. That is, current limiting device 36 is connected between low voltage side terminal 28B and storage battery group 30, and master load switch 41 is connected in series with current limiting device 36 between low voltage side terminal 28B and storage battery group 30. Note that, more generally, master load switch 41, current limiting device 36, and storage battery group 30 connected in series between high voltage side terminal 28A and low voltage side terminal 28B may be connected in any order.

Furthermore, in the example of Fig. 19, each load switch 33 serving as a constituent of storage battery group 30 is connected between a corresponding bank 32 and low voltage side unit bus 31B. Note that, more generally, each load switch 33 and the corresponding bank 32 connected in series between high and low voltage side unit buses 31A and 31B of storage battery group 30 may be connected in any order.

The remainder in configuration in Fig. 19 is similar to that in Fig. 2, and accordingly, identical or equivalent components are identically denoted and will not be described repeatedly. For example, as well as in Fig. 2, metal frame 47 is connected to low voltage side terminal 28B to be equal in potential to low voltage side terminal 28B.

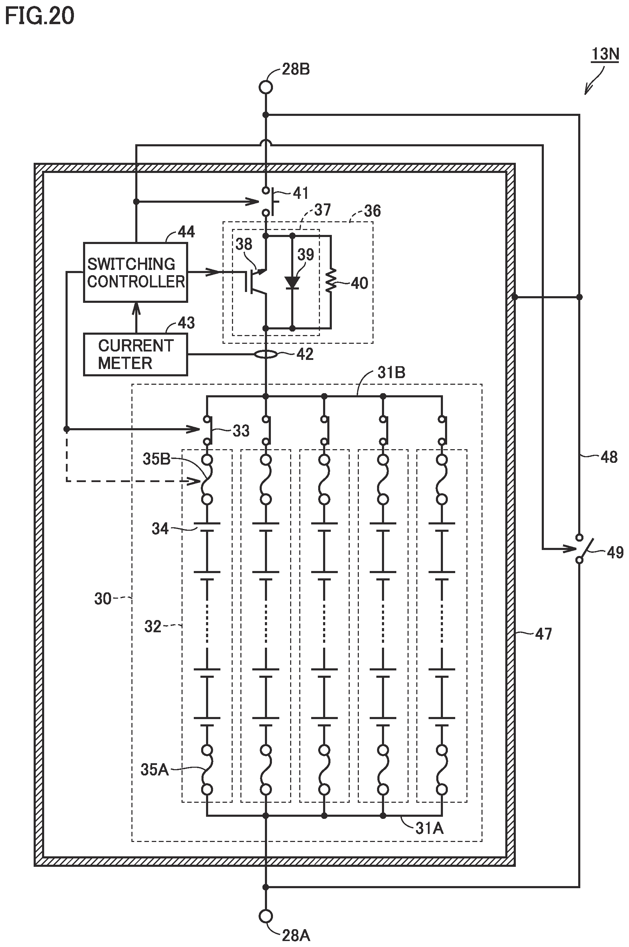

Fig. 20 is an internal circuit diagram of a variation of unit 13N provided in negative side string 12N in the power storage system according to the first embodiment. Fig. 20 shows an upper side as the low voltage side and the positive side, and a lower side as the high voltage side and the negative side. Except for each polarity of storage battery 34, semiconductor switching element 38 and diode 39, unit 13N of Fig. 20 has a configuration that is an inverted version of that of unit 13P of Fig. 19. Accordingly, identical or equivalent components in the Fig. 20 unit 13N and the Fig. 19 unit 13P are identically denoted and will not be described repeatedly in detail.

It goes without saying that the configuration of units 13P and 13N of the variation shown in Figs. 19 and 20 is as effective as the first embodiment.

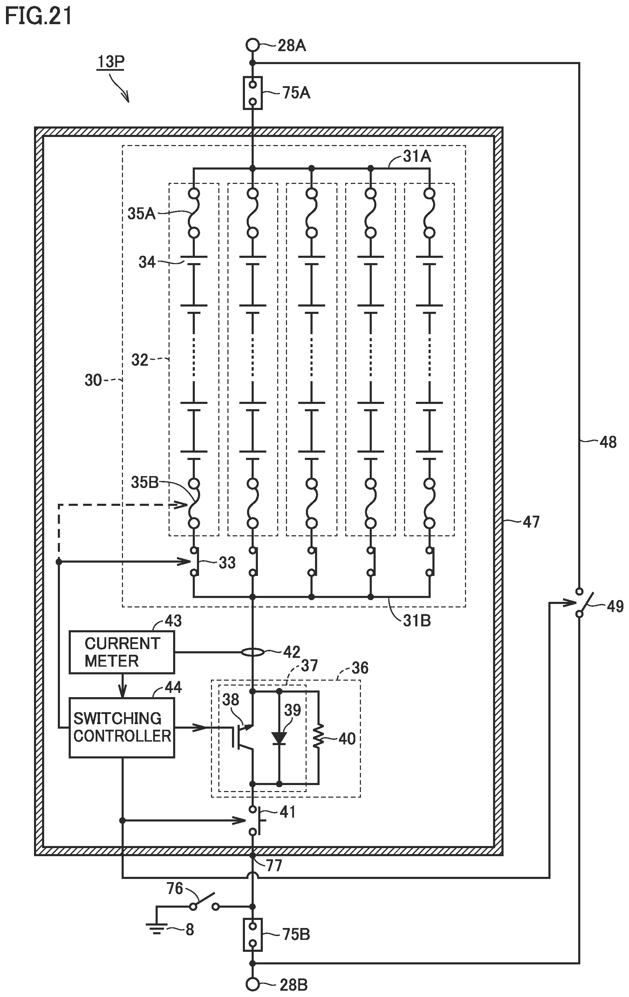

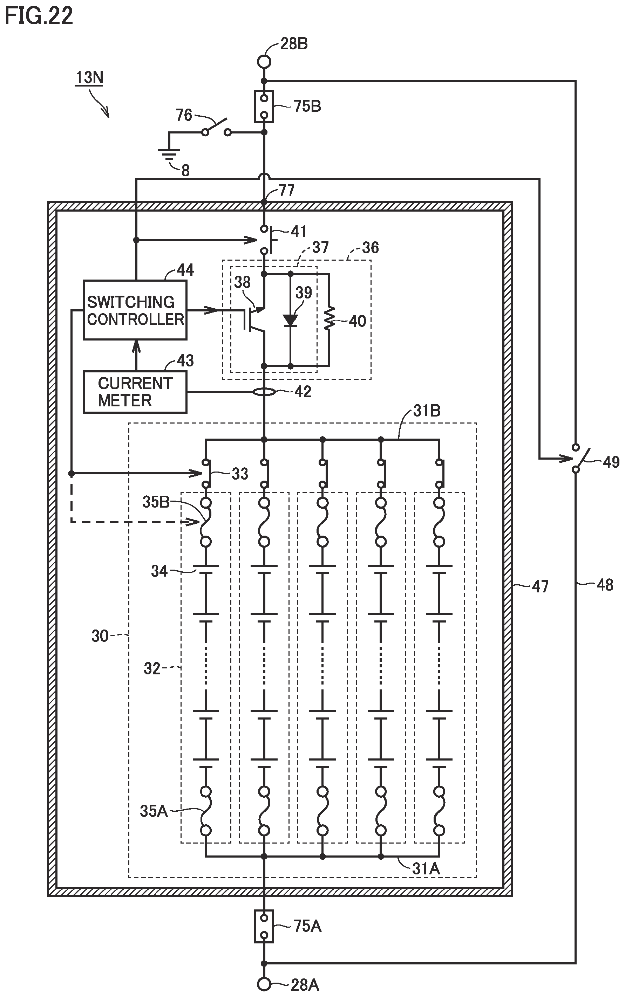

Fig. 21 is an internal circuit diagram of a variation of positive side unit 13P in the power storage system according to the fourth embodiment. Fig. 21 shows an upper side as the high voltage side and the positive side, and shows a lower side as the low voltage side and the negative side. Fig. 22 is an internal circuit diagram of a variation of negative side unit 13N in the power storage system according to the fourth embodiment. Fig. 22 shows an upper side as the low voltage side and the positive side, and a lower side as the high voltage side and the negative side.

Referring to Figs. 21 and 22, first high voltage disconnector 75A is connected between high voltage side terminal 28A and high voltage side unit bus 31A of storage battery group 30. Metal frame 47 is connected to node 77 on a current path between low voltage side terminal 28B and master load switch 41. Second high voltage disconnector 75B is connected between low voltage side terminal 28B and node 77 to which metal frame 47 is connected. Bypass circuit 48 is connected between high voltage side terminal 28A and low voltage side terminal 28B so as to be also in parallel with high voltage disconnectors 75A and 75B. Grounding device 76 is connected between ground 8 and a current path extending between second high voltage disconnector 75B and node 77. The remainder in configuration in Figs. 21 and 22 is similar to that in Figs. 19 and 20, and accordingly, identical or equivalent components are identically denoted and will not be described repeatedly.

It goes without saying that the configuration of units 13P and 13N of the variation shown in Figs. 21 and 22 is as effective as the fourth embodiment.

Connection of high voltage disconnectors 75A and 75B, grounding device 76, and metal frame 47 will generally be described to correspond to any of the case of Figs. 17 and 18 and that of Figs. 21 and 22 according to the fourth embodiment, as follows. That is, metal frame 47 is connected to node 77 on a current path between a series connection of storage battery group 30, current limiting device 36 and master load switch 41, and low voltage side terminal 28B. First high voltage disconnector 75A is connected between a series connection of storage battery group 30, current limiting device 36 and master load switch 41, and high voltage side terminal 28A (that is, at a position closer to high voltage side terminal 28A than storage battery group 30, current limiting device 36 and master load switch 41 are). Second high voltage disconnector 75B is connected between node 77 and low voltage side terminal 28B. Grounding device 76 is connected between ground 8 and a current path extending between second high voltage disconnector 75B and node 77.

It should be understood that the embodiments disclosed herein are illustrative and not limiting in any respect. The scope of the present application is defined by the terms of the claims rather than by the foregoing description, and is intended to encompass any modification equivalent in meaning and scope to the terms of the claims.

### REFERENCE SIGNS LIST

1 power supply system, 2 power storage system, 3 AC/DC converter, 4 transformer, 5 AC circuit breaker, 6, 11 disconnector, 7, 76 grounding device, 8 ground, 10 bus, 12 string, 13 unit, 15 neutral point, 20N negative DC terminal, 20P positive DC terminal, 21 arm circuit, 21N lower arm circuit, 21U upper arm circuit, 22U, 22V, 22W AC connection, 23 unit converter, 24 reactor, 28A high voltage side terminal, 28B low voltage side terminal, 30 storage battery group, 31A, 31B unit bus, 32 bank, 33, 61 load switch, 34 storage battery, 35A, 35B fuse, 36, 62 current limiting device, 37, 63 switch, 38, 53, 64 semiconductor switching element, 39, 54, 65 diode, 40, 66 current limiting element, 41 master load switch, 42, 67 current sensor, 43, 68 current meter, 44, 69 switching controller, 47 metal frame, 48 bypass circuit, 49 bypass switch, 50 power storage element, 51N negative terminal, 51P positive terminal, 52H half bridge circuit, 70 general controller, 75A, 75B high voltage disconnector, P1, P2 input/output terminal.

## Claims

1. A power storage system comprising:
a plurality of units connected in series,
the plurality of units each including:
a high voltage side terminal;
a low voltage side terminal;
a storage battery group connected between the high voltage side terminal and the low voltage side terminal;
a first current limiting device connected between the high voltage side terminal and the storage battery group and having in an operative state a function to limit a current flowing between the high voltage side terminal and the storage battery group;
a first load switch connected in series with the first current limiting device between the high voltage side terminal and the storage battery group;
a bypass circuit connected in parallel with the storage battery group, the first current limiting device, and the first load switch between the high voltage side terminal and the low voltage side terminal; and
a bypass switch to switch the bypass circuit between conductive and non-conductive.

2. A power storage system comprising:
a plurality of units connected in series,
the plurality of units each including:
a high voltage side terminal;
a low voltage side terminal;
a storage battery group connected between the high voltage side terminal and the low voltage side terminal;
a first current limiting device connected between the low voltage side terminal and the storage battery group and having in an operative state a function to limit a current flowing between the low voltage side terminal and the storage battery group;
a first load switch connected in series with the first current limiting device between the low voltage side terminal and the storage battery group;
a bypass circuit connected in parallel with the storage battery group, the first current limiting device, and the first load switch between the high voltage side terminal and the low voltage side terminal; and
a bypass switch to switch the bypass circuit between conductive and non-conductive.

3. The power storage system according to claim 1 or 2, wherein
the plurality of units each have a state in use allowing the storage battery group to be charged and discharged and a stopped state disallowing the storage battery group to be charged and discharged,
in the state in use, the first current limiting device is in a non-operative state, the first load switch is in a closed state, and the bypass switch is in an open state, and
when the state in use is switched to the stopped state, the first current limiting device is initially brought into an operative state, the bypass switch is then brought into a closed state, and the first load switch is then brought into an open state.

4. The power storage system according to claim 3, wherein
in the stopped state, the first current limiting device is in an operative state, the first load switch is in the open state, and the bypass switch is in the closed state, and
when the stopped state is switched to the state in use, the first load switch is initially brought into the closed state, the bypass switch is then brought into the open state, and the first current limiting device is then brought into a non-operative state.

5. The power storage system according to claim 3 or 4, wherein
the plurality of units each further include an individual controller, and
the individual controller switches the state in use to the stopped state when a current exceeding a threshold value flows between the high voltage side terminal and the storage battery group.

6. The power storage system according to any one of claims 1 to 5, wherein
the first current limiting device includes:
a first switch; and
a first current limiting element connected in parallel with the first switch, and
the first switch is in an off state when the first current limiting device is in the operative state.

7. The power storage system according to claim 6, wherein
the first switch is composed of at least one semiconductor element, and
when the first switch is in the off state, the first switch does not conduct a current flowing in a direction to discharge the storage battery group and conducts a current flowing in a direction to charge the storage battery group.

8. The power storage system according to any one of claims 1 to 7, further comprising:
a plurality of strings connected in parallel and each composed of the plurality of units connected in series; and
a bus to which the plurality of strings have their respective high voltage side ends connected in common.

9. The power storage system according to claim 8, further comprising a plurality of second current limiting devices, wherein
the plurality of second current limiting devices are each connected between a corresponding one of the plurality of strings and the bus and in an operative state limit a current flowing between the corresponding string and the bus.

10. The power storage system according to claim 9, wherein
the plurality of second current limiting devices each include:
a second switch; and
a second current limiting element connected in parallel with the second switch, and
the plurality of second current limiting devices in the operative state each have the second switch in an off state.

11. The power storage system according to claim 10, wherein
the second switch is composed of at least one semiconductor element, and
when the second switch is in the off state, the second switch does not conduct a current flowing in a direction to charge the storage battery group and conducts a current flowing in a direction to discharge the storage battery group.

12. The power storage system according to any one of claims 9 to 11, wherein the plurality of strings each have a low voltage side end connected to a common ground.

13. The power storage system according to claim 12, further comprising a plurality of second load switches, wherein
the plurality of second load switches are each connected in series with a corresponding one of the plurality of second current limiting devices between a corresponding one of the plurality of strings and the bus,
the plurality of strings each have a disconnected state and a connected state,
in the disconnected state, the plurality of second load switches have a corresponding second load switch in an open state, and the plurality of units connected in series each have the bypass switch in a closed state, and
in the connected state, the corresponding second load switch is in a closed state, and the plurality of units connected in series each have the bypass switch in an open state.

14. The power storage system according to claim 13, wherein when the connected state is switched to the disconnected state, the corresponding second load switch is initially brought into the open state, and the plurality of units connected in series then each have the bypass switch brought into the closed state in an order from one of the units highest in voltage to one of the units lowest in voltage.

15. The power storage system according to claim 13 or 14, wherein when the disconnected state is switched to the connected state, the plurality of units connected in series each have the bypass switch brought into the open state in an order from one of the units lowest in voltage to one of the units highest in voltage, and the corresponding second load switch is then brought into the open state.

16. The power storage system according to any one of claims 12 to 15, further comprising a general controller to control all of the units constituting the power storage system, wherein
when a ground fault or a short-circuit fault is detected in the power storage system, the general controller issues an open command to a circuit breaker to provide interruption between the power storage system and an external circuit, and closes the bypass switches of all of the units.

17. The power storage system according to any one of claims 1 to 16, wherein
the plurality of units each further include a metal frame disposed to surround the first load switch, the first current limiting device, and the storage battery group, and
the metal frame is connected to the low voltage side terminal.

18. The power storage system according to claim 17, wherein
the metal frame is connected to a node on a current path between the low voltage side terminal and a series connection of the storage battery group, the first current limiting device, and the first load switch,
the plurality of units each further include:
a first disconnector connected at a position closer to the high voltage side terminal than the storage battery group, the first load switch, and the first current limiting device;
a second disconnector connected between the node connected to the metal frame and the low voltage side terminal; and
a grounding device to ground a current path between the node and the second disconnector, and
the bypass circuit is also connected in parallel with the first and second disconnectors.

19. A method for controlling a power storage system comprising a plurality of units connected in series,
the plurality of units each including:
a high voltage side terminal;
a low voltage side terminal;
a storage battery group connected between the high voltage side terminal and the low voltage side terminal;
a first current limiting device connected between the high voltage side terminal and the storage battery group and having in an operative state a function to limit a current flowing between the high voltage side terminal and the storage battery group;
a first load switch connected in series with the first current limiting device between the high voltage side terminal and the storage battery group;
a bypass circuit connected in parallel with the storage battery group, the first current limiting device, and the first load switch between the high voltage side terminal and the low voltage side terminal; and
a bypass switch to switch the bypass circuit between conductive and non-conductive,
the method comprising:
switching, by at least one controller, a first one of the plurality of units from a state in use allowing the storage battery group to be charged and discharged to a stopped state disallowing the storage battery group to be charged and discharged,
the switching the first unit from the state in use to the stopped state including:
a first step of switching the first current limiting device of the first unit from a non-operative state to an operative state;
after the first step, a second step of switching the bypass switch of the first unit from an open state to a closed state; and
after the second step, a third step of opening the first load switch.

20. A method for controlling a power storage system comprising a plurality of units connected in series,
the plurality of units each including:
a high voltage side terminal;
a low voltage side terminal;
a storage battery group connected between the high voltage side terminal and the low voltage side terminal;
a first current limiting device connected between the low voltage side terminal and the storage battery group and having in an operative state a function to limit a current flowing between the low voltage side terminal and the storage battery group;
a first load switch connected in series with the first current limiting device between the low voltage side terminal and the storage battery group;
a bypass circuit connected in parallel with the storage battery group, the first current limiting device, and the first load switch between the high voltage side terminal and the low voltage side terminal; and
a bypass switch to switch the bypass circuit between conductive and non-conductive,
the method comprising:
switching, by at least one controller, a first one of the plurality of units from a state in use allowing the storage battery group to be charged and discharged to a stopped state disallowing the storage battery group to be charged and discharged,
the switching the first unit from the state in use to the stopped state including:
a first step of switching the first current limiting device of the first unit from a non-operative state to an operative state;
after the first step, a second step of switching the bypass switch of the first unit from an open state to a closed state; and
after the second step, a third step of opening the first load switch.

21. The method for controlling a power storage system according to claim 19 or 20, further comprising switching, by the at least one controller, the first unit from the stopped state to the state in use, wherein
the switching the first unit from the stopped state to the state in use includes:
a fourth step of switching the first load switch from an open state to a closed state;
after the fourth step, a fifth step of switching the bypass switch from the closed state to the open state; and
after the fifth step, a sixth step of switching the first current limiting device from an operative state to a non-operative state.

22. The method for controlling a power storage system according to any one of claims 19 to 21, further comprising detecting, by the at least one controller, a current flowing through each of the plurality of units between the high voltage side terminal and the storage battery group, wherein
the switching the first unit from the state in use to the stopped state is performed by the at least one controller when a current exceeding a threshold value flows through the first unit between the high voltage side terminal and the storage battery group.

23. The method for controlling a power storage system according to any one of claims 19 to 22, the power storage system including:
a plurality of strings connected in parallel and each composed of the plurality of units connected in series;
a bus to which the plurality of strings have their respective high voltage side ends connected in common; and
a plurality of second load switches,
the plurality of second load switches being each connected between a corresponding one of the plurality of strings and the bus,
the plurality of strings having their respective low voltage side ends connected to a common ground, the method further comprising:
switching, by the at least one controller, a first one of the plurality of strings from a connected state to a disconnected state, wherein
the switching the first string from the connected state to the disconnected state includes:
a seventh step of switching the second load switch from a closed state to an open state; and
after the seventh step, an eighth step of switching the bypass switch of each unit of the plurality of units connected in series and constituting the first string from the open state to the closed state in an order from one of the units highest in voltage to one of the units lowest in voltage.

24. The method for controlling a power storage system according to claim 23, further comprising switching, by the at least one controller, the first string from the disconnected state to the connected state, wherein
the switching the first string from the disconnected state to the connected state includes:
a ninth step of switching the bypass switch of each unit of the plurality of units connected in series and constituting the first string from the closed state to the open state in an order from one of the units lowest in voltage to one of the units highest in voltage; and
after the ninth step, a tenth step of switching the second load switch from the open state to the closed state.

25. A power storage unit to configure a power storage system,
the power storage system comprising the power storage unit, the power storage unit being a plurality of power storage units connected in series and in parallel,
the power storage unit comprising:
a high voltage side terminal;
a low voltage side terminal;
a storage battery group connected between the high voltage side terminal and the low voltage side terminal;
a first current limiting device connected between the high voltage side terminal and the storage battery group to limit in an operative state a current flowing between the high voltage side terminal and the storage battery group;
a first load switch connected in series with the first current limiting device between the high voltage side terminal and the storage battery group;
a bypass circuit connected in parallel with the storage battery group, the first current limiting device, and the first load switch between the high voltage side terminal and the low voltage side terminal; and
a bypass switch to apply control to conduct and interrupt a current flowing through the bypass circuit.

26. A power storage unit to configure a power storage system,
the power storage system comprising the power storage unit, the power storage unit being a plurality of power storage units connected in series and in parallel,
the power storage unit comprising:
a high voltage side terminal;
a low voltage side terminal;
a storage battery group connected between the high voltage side terminal and the low voltage side terminal;
a first current limiting device connected between the low voltage side terminal and the storage battery group to limit in an operative state a current flowing between the low voltage side terminal and the storage battery group;
a first load switch connected in series with the first current limiting device between the low voltage side terminal and the storage battery group;
a bypass circuit connected in parallel with the storage battery group, the first current limiting device, and the first load switch between the high voltage side terminal and the low voltage side terminal; and
a bypass switch to apply control to conduct and interrupt a current flowing through the bypass circuit.

27. A power supply system comprising:
the power storage system according to any one of claims 1 to 18; and
an AC/DC converter provided between the power storage system and an alternating-current circuit.
